# EUROPEAN PATENT APPLICATION

(11) **EP 4 621 011 A1**
(43) Date of publication of application: **24.09.2025**
(21) Application number: 25164113.0
(22) Date of filing: 17.03.2025
(51) Int. Cl.: C08L 71/14

(54) **ONE-COMPONENT COMPOSITION, FURAN RESIN CURED PRODUCT, AND KIT**

(30) Priority: 19.03.2024 JP 2024043276
(71) Applicant: Yokogawa Electric Corporation, Tokyo 180-8750 (JP)
(72) Inventor: Sako, Takahiro, Musashino-shi, Tokyo, 180-8750 (JP); Mochiduki, Makoto, Musashino-shi, Tokyo, 180-8750 (JP); Egawa, Noriaki, Musashino-shi, Tokyo, 180-8750 (JP); Kubouchi, Masatoshi, Meguro-ku, Tokyo, 152-8550 (JP); Kurniawan, Winarto, Meguro-ku, Tokyo, 152-8550 (JP); Abe, Taiki, Meguro-ku, Tokyo, 152-8550 (JP)
(74) Representative: Grünecker Patent- und Rechtsanwälte PartG mbB

(57) **Abstract**

Provided is a one-component composition that can be cured in a short time and can provide a furan resin cured product having excellent heat resistance and electric property, the furan resin cured product, and a kit that can provide the furan resin cured product. One aspect of the embodiment is a one-component composition that comprises a furan resin, an acid scavenger, and an acid catalyst in which the acid scavenger comprises an epoxy resin.

## Description

### BACKGROUND

### Technical Field

The present disclosure relates to a one-component composition, a furan resin cured product, and a kit.

### Background Art

Because of a high heat resistance, a furan resin has been widely used as a sand binder to form a mold for casting.

Further, the furan resin has been known as a biomass resin using an inedible plant, such as a corncob, bagasse, and a rice husk, as a main raw material, and is attracting attention as an environment-friendly and sustainable non-petroleum based resource.

However, it has been known that the furan resin has a property of causing polycondensation under a runaway chemical reaction, air bubbles are easily formed in the resin during a curing process, and it is difficult to form using the furan resin as a resin having an excellent electric property.

To obtain a resin molding having an excellent electric property by using the furan resin, it is necessary to cause the polycondensation while suppressing the runaway reaction, and specifically, there is a method in which the furan resin is gradually cured over a long period of time. However, in mass production activities of industrial products, taking a long period of time for curing leads to poor productivity, and tends to be avoided.

In view of this, using the furan resin in applications similar to those of other curing resins is difficult, and the furan resin has been applied to practical use only in limited usages, such as a sand binder for a mold in which the formation of air bubbles does not matter.

For example, JP 2015-108059 A discloses a thermosetting furan resin composition that contains a furan resin, a curing catalyst, and a curing accelerator. The curing accelerator contains one metal salt or a mixture of two or more metal salts selected from the group consisting of cobalt, nickel, copper, and zinc.

### SUMMARY

To take advantage of high heat resistance basically provided in a furan resin cured product and expand the application of the furan resin cured product, the inventors seriously conducted examination. Resins (cured products) used for electronic components including a power semiconductor are required to have higher heat resistance and electric property in association with improved performances of the electronic components, and simultaneously, required to be excellent in handleability during operation (during fabrication).

While the furan resin cured product has been widely known as a highly heat-resistant resin, the furan resin cured product is unsuitable for practical application because curing over a long period of time is necessary for improving the electric property. When a resin is used for an electronic component, to minimize a damage on the electronic component due to heat, a resin that can satisfy the electric property by curing in a short period of time is desired.

The present disclosure provides a one-component composition that can be cured in a short time and can provide a furan resin cured product having excellent heat resistance and electric property, the furan resin cured product, and a kit that can provide the furan resin cured product.

The inventors seriously studied to solve the above-described problem, and found that a specific one-component composition comprising a furan resin can be cured in a short time and can provide a furan resin cured product having excellent heat resistance and electric property, found the furan resin cured product that is obtained from a specific raw material composition comprising a furan resin and has the excellent heat resistance and electric property, and found a kit that can provide the furan resin cured product, thus reaching the present disclosure.

Examples of aspects of the embodiment are described as follows.
[1] A one-component composition comprising a furan resin, an acid scavenger, and an acid catalyst, in which the acid scavenger comprises an epoxy resin.
[2] The one-component composition according to [1], in which an amount of substance of cation derived from the acid catalyst is equal to or less than an amount of substance of an acid scavenging moiety comprised in the acid scavenger.
[3] The one-component composition according to [1] or [2], in which a viscosity increase rate after 24 hours in a case of storing at 25°C after preparation is 100% or less.
[4] The one-component composition according to any of [1] to [3], in which a viscosity increase rate after 24 hours in a case of storing at 40°C after preparation is 100% or less.
[5] A furan resin cured product that is a cured product of a raw material composition comprising a furan resin, an acid scavenger, and an acid catalyst, in which the acid scavenger comprises an epoxy resin.
[6] The furan resin cured product according to [5], in which in the raw material composition, an amount of substance of cation derived from the acid catalyst is equal to or less than an amount of substance of an acid scavenging moiety comprised in the acid scavenger.
[7] The furan resin cured product according to [5] or [6], in which a relative dielectric constant is 5.0 εr or less and a dielectric loss tangent is 0.1 or less at 1 MHz.
[8] The furan resin cured product according to any of [5] to [7], in which a volume resistivity is 1.0×10¹³ Ω•cm or more.
[9] The furan resin cured product according to any of [5] to [8], in which a dielectric breakdown voltage is 7 kV or more, and a dielectric breakdown strength is 3 kV/mm or more.
[10] A kit containing a first agent comprising a furan resin, and a second agent comprising an acid scavenger and an acid catalyst.

The present disclosure can provide the one-component composition that can be cured in a short time and can provide the furan resin cured product having the excellent heat resistance and electric property, the furan resin cured product, and the kit that can provide the furan resin cured product.

### DETAILED DESCRIPTION

The following describes a one-component composition, a furan resin cured product, and a kit as the embodiment of the present disclosure in detail.

One aspect of the embodiment is a one-component composition comprising a furan resin, an acid scavenger, and an acid catalyst, in which the acid scavenger comprises an epoxy resin. In the one-component composition of the embodiment, comprising the acid scavenger and the acid catalyst suppresses a runaway chemical reaction caused by a contact of the furan resin with the acid catalyst, thereby allowing polycondensation at an appropriate speed. Since the one-component composition is one-component type, the handleability is excellent. Polycondensation of the one-component composition allows obtaining a furan resin cured product of the embodiment.

One aspect of the embodiment is a furan resin cured product that is a cured product of a raw material composition comprising a furan resin, an acid scavenger, and an acid catalyst, in which the acid scavenger comprises an epoxy resin. Since the furan resin cured product of the embodiment has excellent heat resistance and electric property, the furan resin cured product of the embodiment can be used for various applications, such as a member constituting an electronic component including a power semiconductor.

One aspect of the embodiment is a kit that contains a first agent comprising a furan resin and a second agent comprising an acid scavenger and an acid catalyst. The kit of the embodiment can provide the one-component composition of the embodiment by mixing, and can provide the furan resin cured product of the embodiment by polycondensation.

The following describes the embodiment in detail.

### (Furan Resin)

In the present disclosure, the furan resin only needs to be a resin obtained by polymerization, for example, polycondensation such as dehydration condensation, of a monomer containing furfuryl alcohol. Since the monomer constituting the furan resin is reactive, another reaction, such as an intramolecular Diels-Alder reaction, an ene reaction, and a Michael addition reaction, may occur during, before, or after the polycondensation. The furan resin may have a three-dimensional crosslinked structure through these reactions. The furan resin may be a polymer having only a structural unit derived from furfuryl alcohol as a monomer unit, or may be a copolymer having a structural unit derived from furfuryl alcohol and a structural unit derived from another monomer. Examples of the other monomer include aldehydes, urea, ethylene urea, melamine, and phenols, and one kind may be used alone, or two or more kinds may be used. As the furan resin, one that is to be cured by dehydration condensation with the acid catalyst is used.

In one of preferred aspects, one or more resins used as the furan resin are selected from the group consisting of condensates of furfuryl alcohol (polyfurfuryl alcohol), condensates of furfuryl alcohol and aldehydes, condensates of furfuryl alcohol and urea, condensates of furfuryl alcohol, urea, and aldehydes, condensates of furfuryl alcohol and ethylene urea, condensates of furfuryl alcohol, ethylene urea, and aldehydes, condensates of furfuryl alcohol and melamine, condensates of furfuryl alcohol, melamine, and aldehydes, and condensates of furfuryl alcohol, phenols, and aldehydes.

Examples of the aldehydes include formaldehyde, acetaldehyde, glyoxal, furfural, terephthalaldehyde, and hydroxymethylfurfural, and one or more aldehydes among them can be used. From the aspect of availability, using formaldehyde is preferable.

Examples of the phenols include phenol, cresol, resorcinol, bisphenol A, bisphenol C, bisphenol E, and bisphenol F, one or more phenols among them can be used.

The furan resin may be one to make hydroxyl groups in the molecule or at the end of the molecule substituted with ester, ether, or the like. For example, modified furan resins, such as an esterified furan resin obtained by condensation of hydroxyl groups of the furan resin and carboxylic acid and an epoxidized furan resin in which epichloropydrin (epichlorohydrin) is added to hydroxyl groups of the furan resin, are included in the furan resin of the present disclosure.

The furan resin can be manufactured by a publicly known method, and a commercial product may be used. The molecular weight, the molecular weight distribution, the molecular chain length, the three-dimensional structure, and the like of the furan resin are not specifically limited. One furan resin may be used alone, or two or more furan resins may be used.

While the furan resin may be a liquid or a solid, in the case of the solid, for example, a furan resin that is to be dispersed in an epoxy resin and become a one-component composition as a whole composition is used. A general formula (I) below indicates a representative example for obtaining the condensate of furfuryl alcohol (polyfurfuryl alcohol) from furfuryl alcohol.

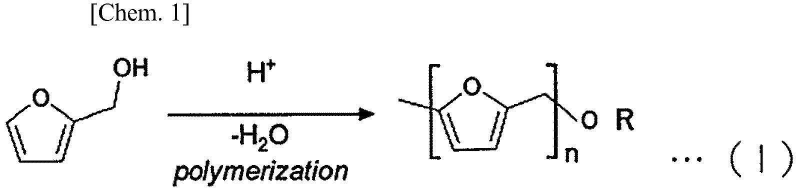

In the general formula (I), ***n*** is preferably 1 to 1000, and more preferably 2 to 100. R is not specifically limited to, and may include H or any carbon atom side chain, such as, ether, and ester, bonded thereto, or may have any side chain, such as Si, S, and N, bonded thereto.

### (Acid Scavenger)

In the present disclosure, the acid scavenger is a constituent that can suppress the runaway reaction of the furan resin by temporarily capturing at least a part of the acid catalyst. In the present disclosure, the acid scavenger comprises an epoxy resin. The epoxy resin can be polycondensed with the furan resin by the acid catalyst, and is a constituent that contributes to the improvement of physical property of the furan resin cured product.

The acid scavenger may comprise a further acid scavenger other than the epoxy resin, and may comprise, for example, amine, oxetane, and episulfide. The proportion of the epoxy resin and the further acid scavenger other than the epoxy resin in the acid scavenger is not limited insofar as an amount of substance of cation derived from the acid catalyst becomes equal to or less than an amount of substance of an acid scavenging moiety comprised in the acid scavenger, that is, an amount of substance that is a sum of an amount of substance of an acid scavenging moiety comprised in the epoxy resin and an amount of substance of an acid scavenging moiety comprised in the further acid scavenger other than the epoxy resin, as described in detail below. Although not specifically limited, the proportion of the epoxy resin in 100 pts.mass of the acid scavenger is usually 50 pts.mass or more, preferably 60 pts.mass or more, more preferably 70 pts.mass or more, and further preferably 80 pts.mass or more. For example, the acid scavenger is a mixture comprising epoxy resin and amine. For example, the acid scavenger is a mixture comprising epoxy resin and oxetane. For example, the acid scavenger is a mixture comprising epoxy resin and episulfide. For example, the acid scavenger is a mixture comprising epoxy resin, oxetane, and amine. For example, the acid scavenger is a mixture comprising epoxy resin, oxetane, amine, and episulfide. The acid scavenger need not substantially comprise the further acid scavenger other than the epoxy resin. The term "not substantially comprise" means that the further acid scavenger other than the epoxy resin is 1 pts.mass or less in 100 pts.mass of the acid scavenger. The acid scavenger is, for example, an epoxy resin.

The epoxy resin only needs to be a compound that comprises one or more epoxy groups in the molecule, for example, one (monofunctional epoxy resin), two (bifunctional epoxy resin), and three or four or more (multifunctional epoxy resin), and the epoxy resin is not specifically limited. Examples of the epoxy resin include, in a classification based on the neighboring group of the epoxy group, glycidyl ether type epoxy resin, glycidyl ester type epoxy resin such as diglycidyl phthalate, glycidyl amine type epoxy resin, glycidyl amideimide type epoxy resin, alicyclic epoxy resin, and phenol novolac type epoxy resin. In a classification based on the skeleton of the epoxy resin, examples of the epoxy resin include bisphenol skeleton type epoxy resin, for example, bisphenol A, B, C, E, F, G, M, S, or Z skeleton type epoxy resin, naphthalene skeleton type epoxy resin, phenoxy skeleton type epoxy resin, biphenyl skeleton type epoxy resin, and fatty acid (derived from oil and fat) skeleton type epoxy resin. In one of preferred aspects, as the epoxy resin, glycidyl ether type epoxy resin such as ethylene glycol diglycidyl ether, bisphenol A type epoxy resin, cresol novolac-type epoxy resin, glycidyl amine type epoxy resin, alicyclic epoxy resin, saturated/unsaturated fatty acid glycidyl, epoxidized unsaturated fatty acid, epoxidized terpenes, or the like is used. In one of preferred aspects, from the aspect of polymerization, the epoxy resin is alicyclic epoxy resin that can easily undergo cationic polymerization with the acid catalyst. The alicyclic epoxy resin is a general term of epoxy resin having a cycloalkane structure. Examples of epoxidized terpenes include isophorone oxide, carveol oxide, carveol dioxide, and limonene dioxide (CELLOXIDE 3000). Examples of saturated/unsaturated fatty acid glycidyl and epoxidized unsaturated fatty acid include epoxide derived from oil and fat or fatty acid, such as fatty acid (dimer acid) glycidyl, fatty acid (monocarboxylic acid) glycidyl, epoxidized unsaturated fatty acid, glycidyl linoleate, glycidyl oleate, glycidyl palmitate, glycidyl stearate, glycidyl linolenate, glycidyl laurate, glycidyl caprylate, glycidyl caprate, and epoxidized linseed oil. One epoxy resin may be used alone, or two or more epoxy resins may be used.

Table 1 below indicates examples of epoxy resin.

### [Table 1]

**Table 1**

| Compound Number | Compound |
|---|---|
| 1 | 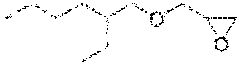 |
| 2 | 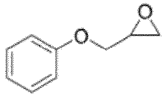 |
| 3 | 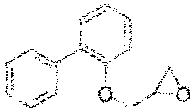 |
| 4 | 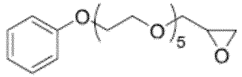 |
| 5 | 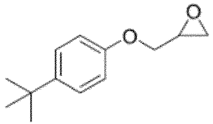 |
| 6 | 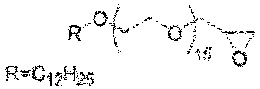 |
| 7 | 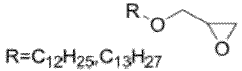 |
| 8 | 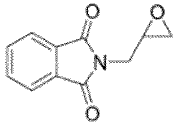 |
| 9 | 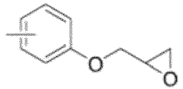 |
| 10 | 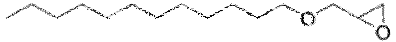 |
| 11 | 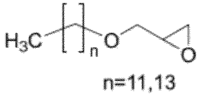 |
| 12 | 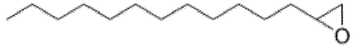 |
| 13 | 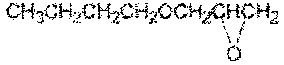 |
| 14 | 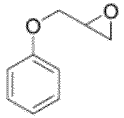 |
| 15 | 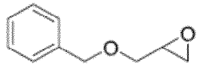 |
| 16 | 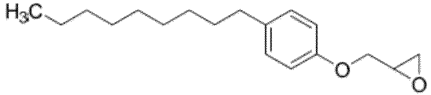 |
| 17 | 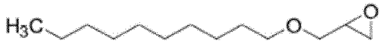 |
| 18 | 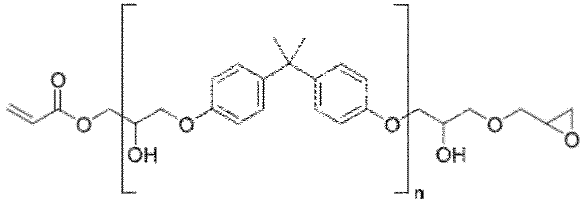 |
| 19 | 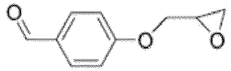 |
| 20 | 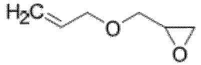 |
| 21 | 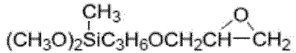 |
| 22 | 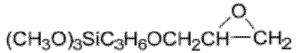 |
| 23 | 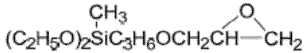 |
| 24 | 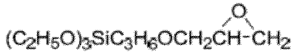 |
| 25 | 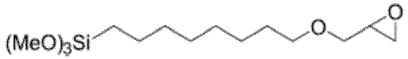 |
| 26 | 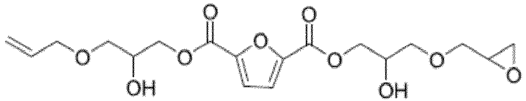 |
| 27 | 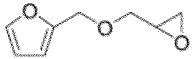 |
| 28 | 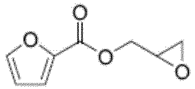 |
| 29 | 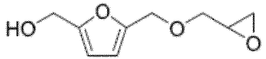 |
| 30 | 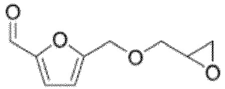 |
| 31 | 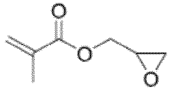 |
| 32 | 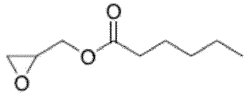 |
| 33 | 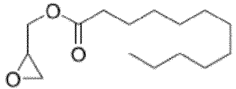 |
| 34 | 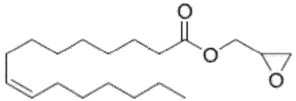 |
| 35 | 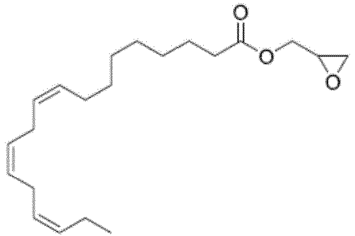 |
| 36 | 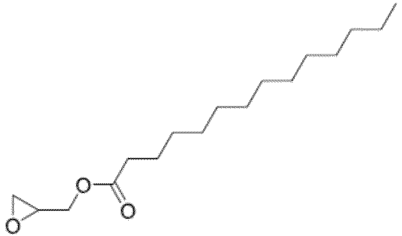 |
| 37 | 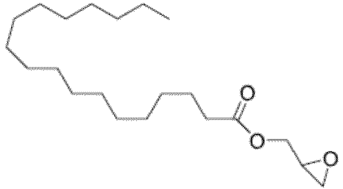 |
| 38 | 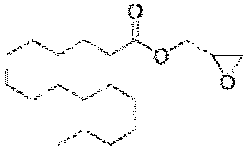 |
| 39 | 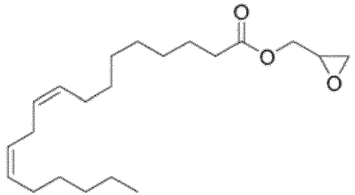 |
| 40 | 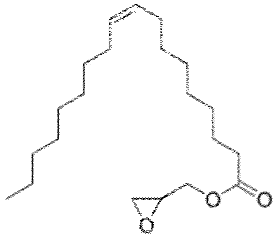 |
| 41 | 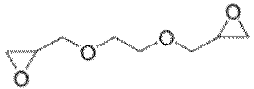 |
| 42 | 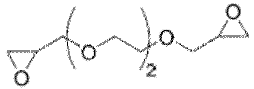 |
| 43 | 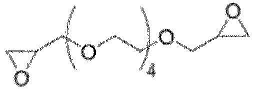 |
| 44 | 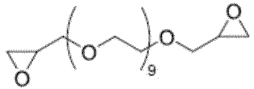 |
| 45 | 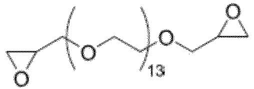 |
| 46 | 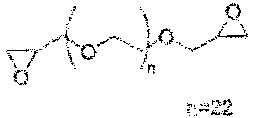 |
| 47 | 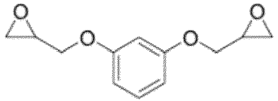 |
| 48 | 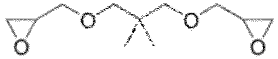 |
| 49 | 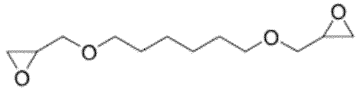 |
| 50 | 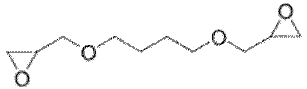 |
| 51 | 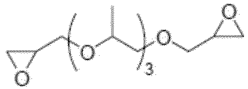 |
| 52 | 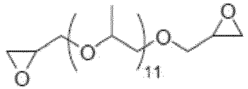 |
| 53 | 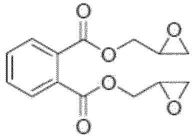 |
| 54 | 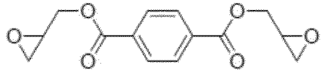 |
| 55 | 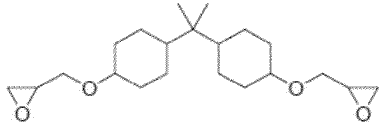 |
| 56 | 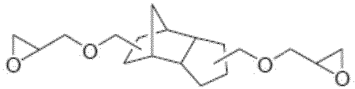 |
| 57 | 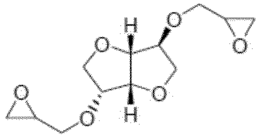 |
| 58 | 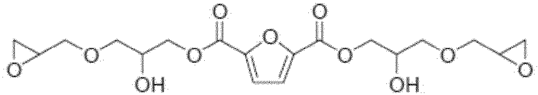 |
| 59 | 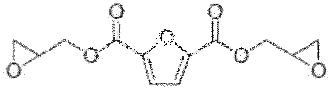 |
| 60 | 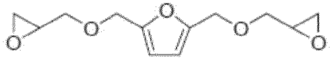 |
| 61 | 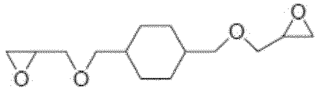 |
| 62 | 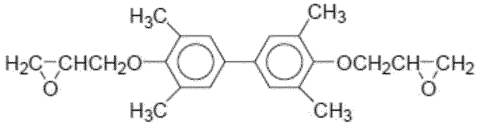 |
| 63 | 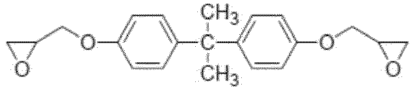 |
| 64 | 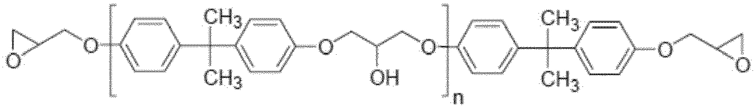 |
| 65 | 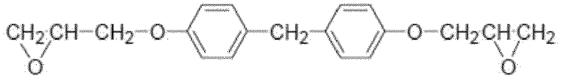 |
| 66 | 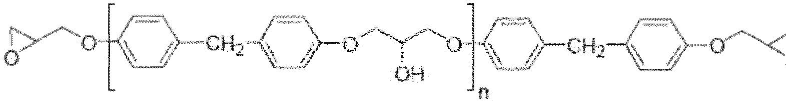 |
| 67 | 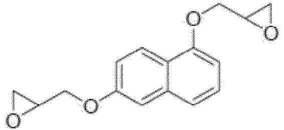 |
| 68 | 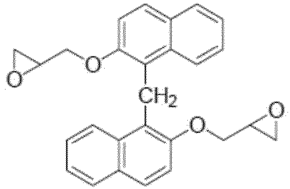 |
| 69 | 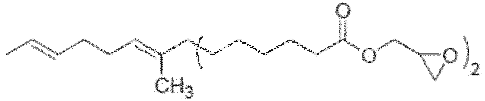 |
| 70 | 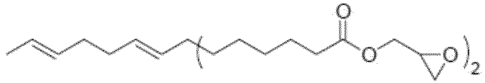 |
| 71 | 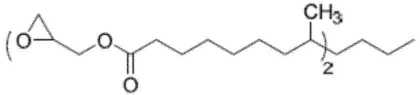 |
| 72 | 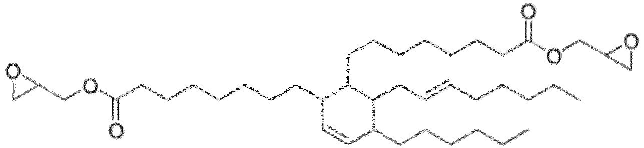 |
| 73 | 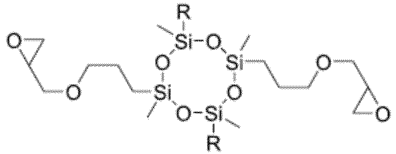 |
| 74 | 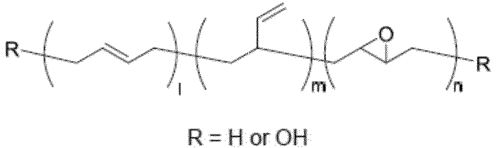 |
| 75 | 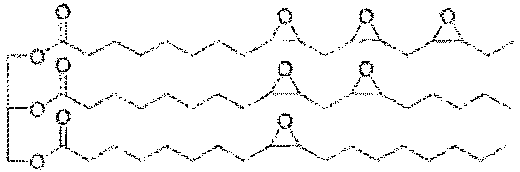 |
| 76 | 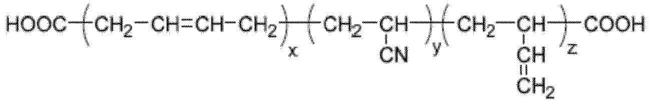 |
| 77 | 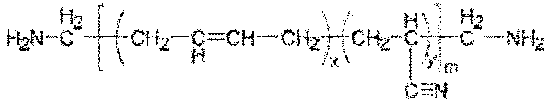 |
| 78 | 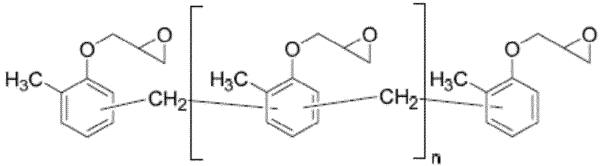 |
| 79 | 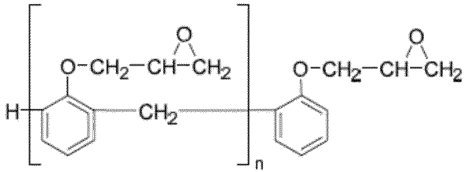 |
| 80 | 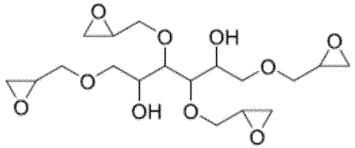 |
| 81 | 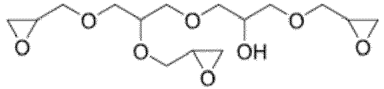 |
| 82 | 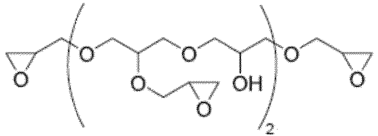 |
| 83 | 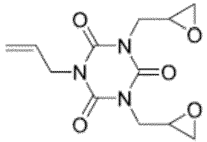 |
| 84 | 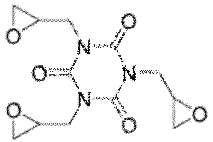 |
| 85 | 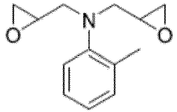 |
| 86 | 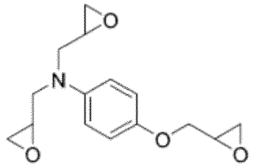 |
| 87 | 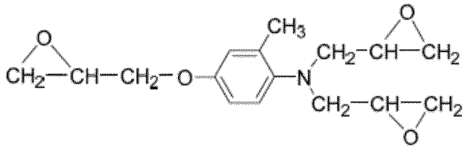 |
| 88 | 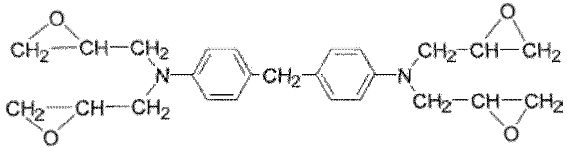 |
| 89 | 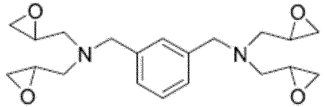 |
| 90 | 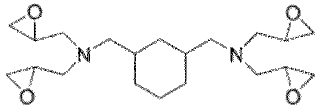 |
| 91 | 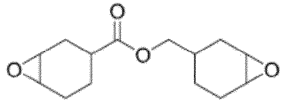 |
| 92 | 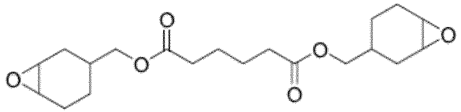 |
| 93 | 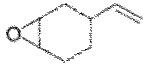 |
| 94 | 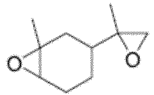 |
| 95 | 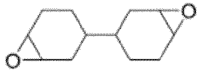 |
| 96 | 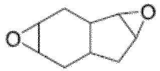 |
| 97 | 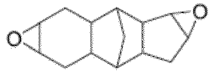 |
| 98 | 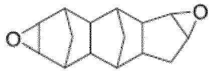 |
| 99 | 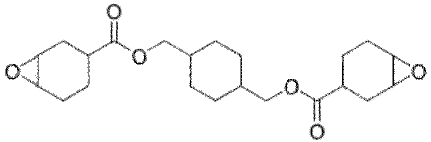 |
| 100 | 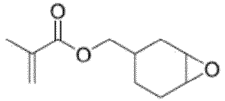 |
| 101 | 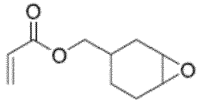 |
| 102 | 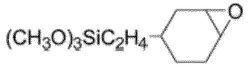 |
| 103 | 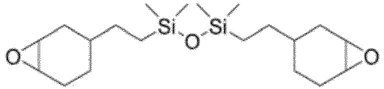 |
| 104 | 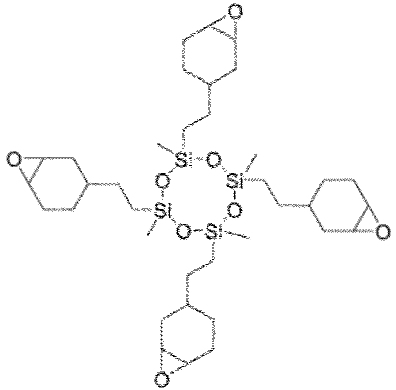 |
| 105 | 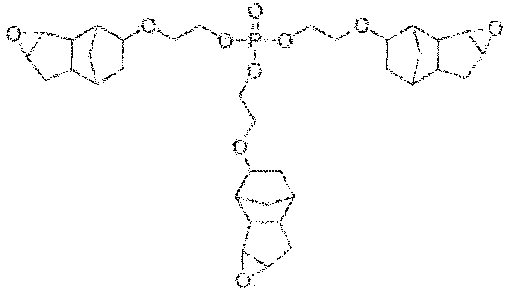 |
| 106 | 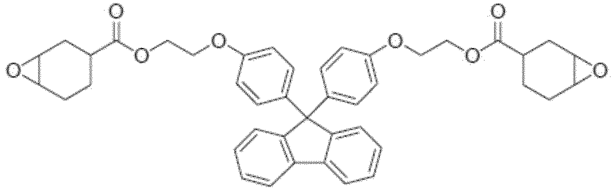 |
| 107 | 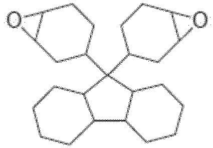 |
| 108 | 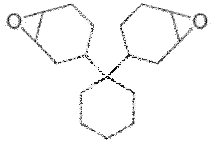 |
| 109 | 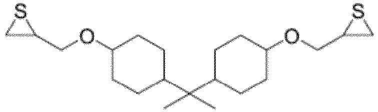 |

Table 2 below indicates preferable aspects of epoxy resin.

### [Table 2]

**Table 2**

| Compound Number | Compound |
|---|---|
| 4 | 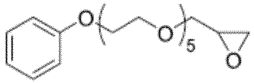 |
| 8 | 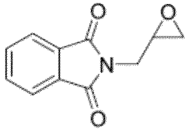 |
| 18 | 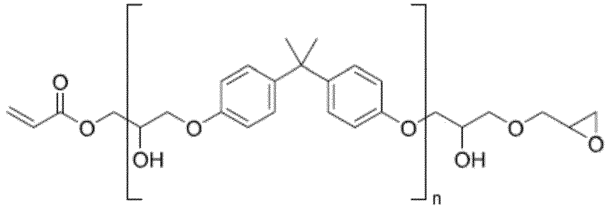 |
| 20 | 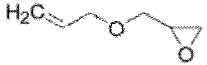 |
| 24 | 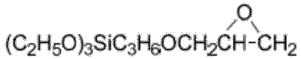 |
| 26 | 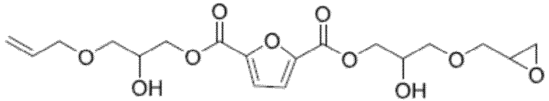 |
| 27 | 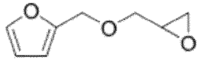 |
| 28 | 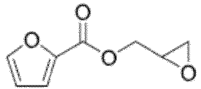 |
| 37 | 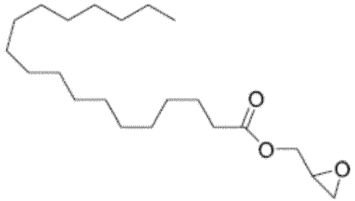 |
| 41 | 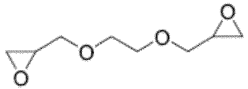 |
| 53 | 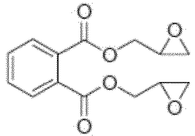 |
| 55 | 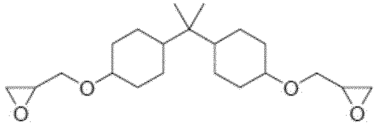 |
| 56 | 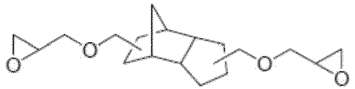 |
| 57 | 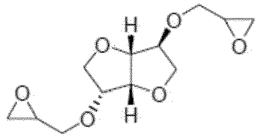 |
| 58 | 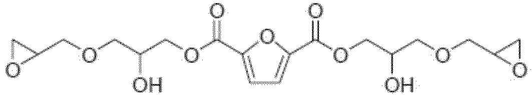 |
| 59 | 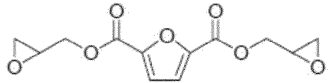 |
| 60 | 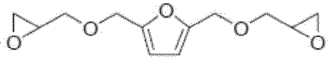 |
| 61 | 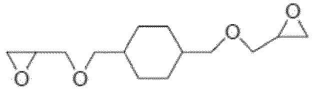 |
| 62 | 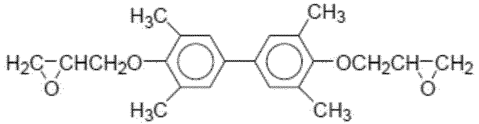 |
| 63 | 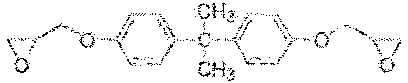 |
| 65 | 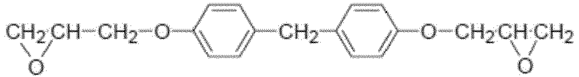 |
| 67 | 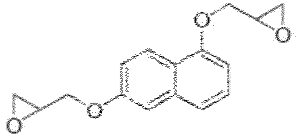 |
| 72 | 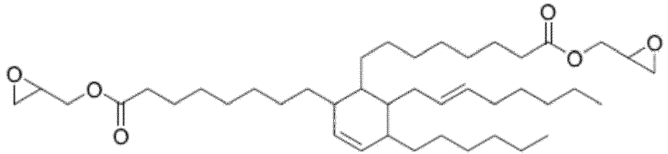 |
| 74 | 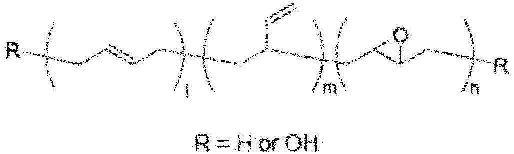 |
| 75 | 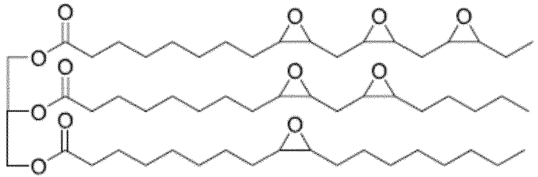 |
| 76 | 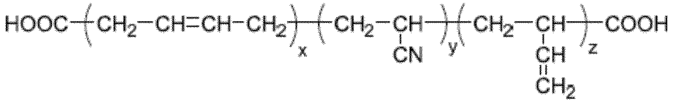 |
| 77 | 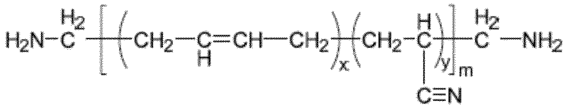 |
| 78 | 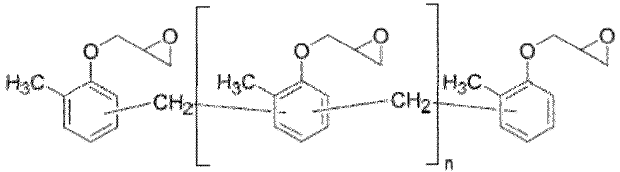 |
| 79 | 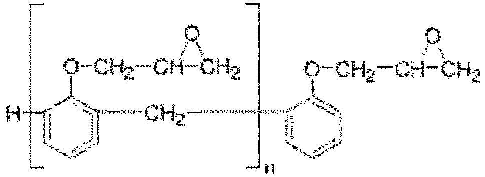 |
| 83 | 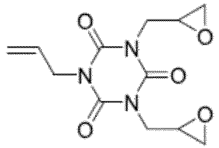 |
| 85 | 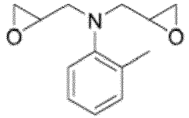 |
| 88 | 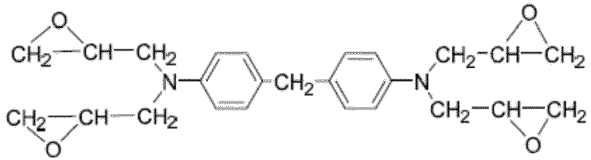 |
| 91 | 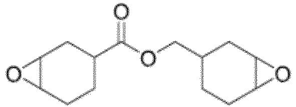 |
| 92 | 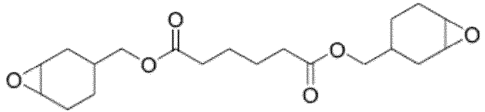 |
| 93 | 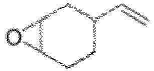 |
| 94 | 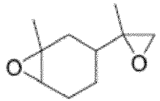 |
| 95 | 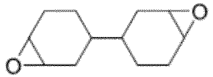 |
| 96 | 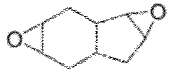 |
| 97 | 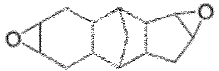 |
| 98 | 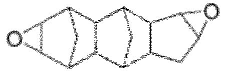 |
| 99 | 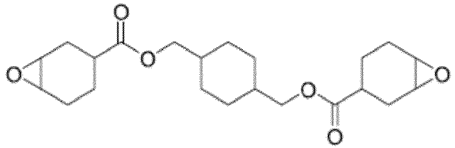 |
| 100 | 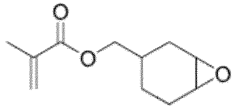 |
| 101 | 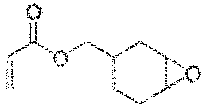 |
| 102 | 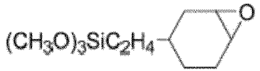 |
| 103 | 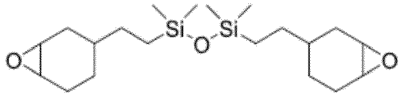 |
| 104 | 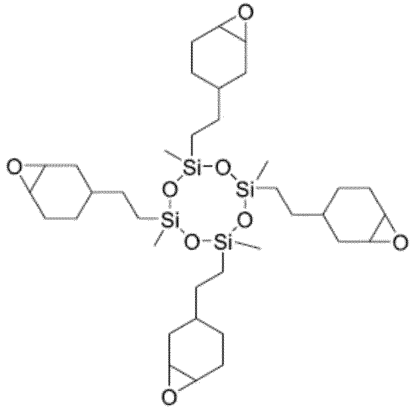 |
| 105 | 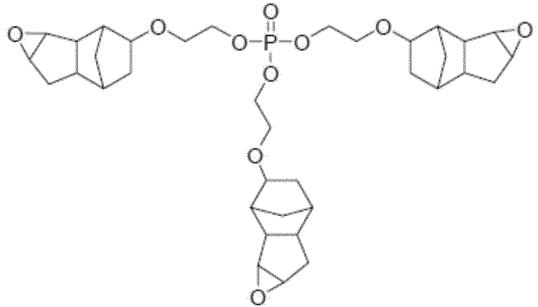 |
| 106 | 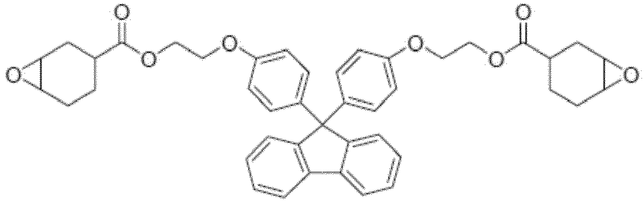 |
| 107 | 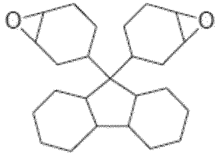 |
| 108 | 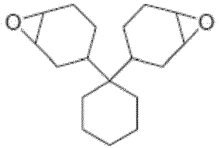 |

Table 3 below indicates more preferable aspects of epoxy resin.

### [Table 3]

**Table 3**

| Compound Number | Compound |
|---|---|
| 41 | 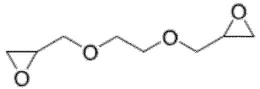 |
| 55 | 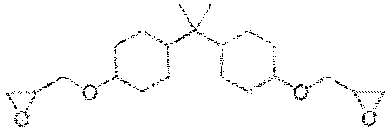 |
| 63 | 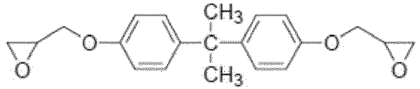 |
| 72 | 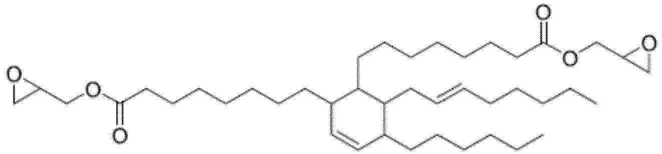 |
| 75 | 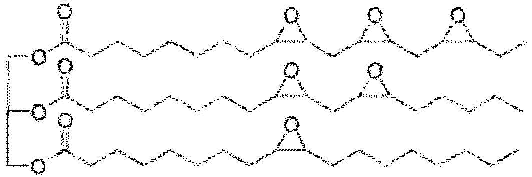 |
| 88 | 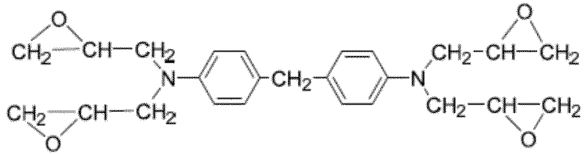 |
| 91 | 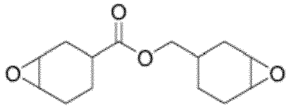 |
| 94 | 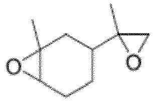 |

While the epoxy resin may be a liquid or a solid, in the case of the solid, for example, an epoxy resin that is to be dispersed in a furan resin and become a one-component composition as a whole composition is used. It is preferable that at least one of the furan resin or the epoxy resin is a liquid. The liquid and the solid mean a state under a condition of 25°C and 1 atm.

As the epoxy resin, commercially available products may be used, for example, EX series (manufactured by Nagase ChemteX Corporation), ED series (manufactured by ADEKA Corporation), ADK CIZER O series (manufactured by ADEKA Corporation), EP series (manufactured by ADEKA Corporation), EPOGOSEY series (manufactured by Yokkaichi Chemical Company Limited), RD series (manufactured by Aditya Birla Chemicals), NK Oligo EA series (manufactured by SHIN-NAKAMURA CHEMICAL Co., Ltd.), KBM series (manufactured by Shin-Etsu Chemical Co., Ltd.), KBE series (manufactured by Shin-Etsu Chemical Co., Ltd.), X-40 series (manufactured by Shin-Etsu Chemical Co., Ltd.), KR series (manufactured by Shin-Etsu Chemical Co., Ltd.), XY series (manufactured by Anhui Xinyuan Technology Co., LTD.), DME series (manufactured by New Japan Chemical Co., Ltd.), YX series (manufactured by Mitsubishi Chemical Corporation), jER series (manufactured by Mitsubishi Chemical Corporation), EPICLON HP series (manufactured by DIC CORPORATION), EPICLON N series (manufactured by DIC CORPORATION), EPOLEAD PB series (manufactured by Daicel Corporation), CELLOXIDE series (manufactured by Daicel Corporation), Hypro series (manufactured by Huntsman), SUMI-EPOXY ELM series (manufactured by SUMITOMO CHEMICAL COMPANY, LIMITED), TETRAD series (manufactured by MITSUBISHI GAS CHEMICAL COMPANY, INC.), EPOCHALIC series (manufactured by ENEOS Corporation), S series (manufactured by Synasia), TBIS series (manufactured by Taoka Chemical Co., Ltd.), and epoxy resin manufactured by Wako Pure Chemical Corporation.

### (Acid Catalyst)

In the present disclosure, the acid catalyst only needs to enable polycondensation of the furan resin, and is not specifically limited. In one of preferred aspects, an acid having pKa of 3.0 or less is used as the acid catalyst. One acid may be used alone, or two or more acids may be used.

The acid catalyst may be a water-soluble acid, or a fat-soluble acid. The acid catalyst may be a Bronsted acid, or a Lewis acid. As the Lewis acid, an acid comprising boron, aluminum, titanium, iron, zinc, tin, or zirconium can be used. When the acid is a solid, such as a powder, the acid may be used after being dissolved in a solvent, such as water, ethanol, ethylene glycol, and acetone, or may be used by being appropriately dispersed in a resin without being dissolved.

As specific examples of the acid catalyst, paratoluenesulfonic acid, trifluoroacetic acid, borane-based acid (for example, tetrakis(pentafluorophenyl)borate), and antimony-based acid (for example, hexafluoroantimonic acid) can be used.

### (Other Components)

The one-component composition and the kit of the embodiment may comprise a component other than the furan resin, the acid scavenger, and the acid catalyst (also referred to as the other component). Examples of the other component include, although they vary depending on the application of the furan resin cured product, inorganic minerals, such as silica gel, alumina, aluminum nitride, calcium carbonate, and talc, and derivatives thereof, elastomers, such as fatty acid, silicone, and polybutadiene, and derivatives thereof, and additives, such as a silane coupling agent, an antioxidizing agent, an anti-foam agent, and a surfactant. Although not specifically limited, the amount of the other component is, for example, 1 to 100 pts.mass, and preferably 10 to 50 pts.mass with respect to 100 pts.mass of the furan resin.

### (One-Component Composition)

The one-component composition of the embodiment comprises the furan resin, the acid scavenger, and the acid catalyst, and the acid scavenger comprises the epoxy resin. The one-component composition of the present disclosure can cure by polycondensation of the furan resin with the acid catalyst, and since the one-component composition of the present disclosure comprises the acid scavenger, the progress of polycondensation in a runaway manner can be suppressed. Therefore, the one-component composition of the present disclosure is excellent in handleability. By polycondensation of the one-component composition of the present disclosure, the furan resin cured product of the embodiment can be obtained.

In one of preferred aspects, in the one-component composition of the present disclosure, the amount of substance of cation derived from the acid catalyst is equal to or less than the amount of substance of the acid scavenging moiety comprised in the acid scavenger. The acid scavenging moiety means a partial structure of the acid scavenger capable of temporarily capturing the acid catalyst, and for example, an epoxy group in epoxy resin, an amino group in amine, and an oxetane ring in oxetane correspond to the acid scavenging moiety.

The amount of substance of cation is, for example, synonymous with the amount of substance of the acid catalyst when the acid catalyst is an acid that can release one hydrogen cation (H⁺), and the amount of substance of cation is ***n*** times of the amount of substance of the acid catalyst when the acid catalyst is an acid that can release ***n*** (***n*** is a natural number) hydrogen cations (H⁺). When the acid scavenger is an epoxy resin, the acid scavenging moiety is an epoxy group, and the epoxy resin has one epoxy group in the molecule, the amount of substance of the acid scavenging moiety is synonymous with the amount of substance of the epoxy resin, and when the epoxy resin has ***n*** (***n*** is a natural number) epoxy groups in the molecule, the amount of substance of the acid scavenging moiety is ***n*** times of the amount of substance of the epoxy resin.

In the one-component composition of the present disclosure, when the amount of substance of cation derived from the acid catalyst is assumed to be 1, the amount of substance of the acid scavenging moiety comprised in the acid scavenger is preferably 1 to 10, more preferably 1 to 6, and further preferably 1 to 3. The above-described range is preferable because a viscosity increase rate (pot life) after 24 hours is low, curability is high, and the heat resistance and the electric property after curing can be provided.

In the one-component composition of the present disclosure, the content of the furan resin is not limited. In one embodiment, the one-component composition of the present disclosure comprises the furan resin in an amount of ordinarily 20 mass% or more, preferably 25 mass% or more, and ordinarily 98 mass% or less, preferably 95 mass% or less with respect to the total mass of the one-component composition.

In the one-component composition of the present disclosure, the content of the acid scavenger is not limited insofar as the proportion of the amount of substance of cation derived from the acid catalyst and the amount of substance of the acid scavenging moiety comprised in the acid scavenger becomes a proportion as described above.

In the one-component composition of the present disclosure, the content of the epoxy resin is not limited. In one embodiment, the one-component composition of the present disclosure comprises the epoxy resin in an amount of ordinarily 1 mass% or more, preferably 10 mass% or more, and ordinarily 100 mass% or less, preferably 50 mass% or less with respect to 100 pts.mass of the furan resin.

In the one-component composition of the present disclosure, the content of the acid catalyst is not limited. In one embodiment, the one-component composition of the present disclosure comprises the acid catalyst in an amount of ordinarily 0.1 mass% or more, preferably 1 mass% or more, more preferably 2 mass% or more, further more preferably 3 mass% or more, and ordinarily 500 mass% or less, preferably 150 mass% or less, more preferably 100 mass% or less, further more preferably 20 mass% or less with respect to 100 pts.mass of the furan resin.

Since the one-component composition of the present disclosure is a one-component thermosetting composition, the one-component composition of the present disclosure is preferably stored under a low temperature condition, such as freezing or refrigeration when it is stored. The one-component composition of the present disclosure may be stored at any temperature of 40°C or lower because the rapid polymerization is avoided at 40°C or lower in practical application.

In one of preferred aspects, in the one-component composition of the present disclosure, the viscosity increase rate after 24 hours when stored at 25°C after preparation is 100% or less. When the viscosity increase rate after 24 hours when stored at 25°C after preparation is 100% or less, it can be determined that the runaway polycondensation of the furan resin is sufficiently suppressed, and the handleability is especially excellent.

In one of preferred aspects, in the one-component composition of the present disclosure, the viscosity increase rate after 24 hours when stored at 40°C after preparation is 100% or less. When the viscosity increase rate after 24 hours when stored at 40°C after preparation is 100% or less, it can be determined that the runaway polycondensation of the furan resin is sufficiently suppressed, and the handleability is especially excellent. That is, at transportation, use, storage, and disposal of the one-component composition, the handleability is excellent even in a high temperature environment, such as a factory in summer.

### (Method for Manufacturing One-Component Composition)

The one-component composition can be obtained by dispersing and mixing respective components, specifically the furan resin, the acid scavenger, and the acid catalyst, and the other component used as necessary. When the respective components are dispersed and mixed, usually, the furan resin and the acid catalyst are mixed in the presence of the acid scavenger, such as an epoxy resin. Specifically, the acid catalyst may be mixed with the furan resin after the acid catalyst is dispersed in the acid scavenger, or the furan resin may be mixed with the acid catalyst after the furan resin is mixed with the acid scavenger. By mixing the furan resin and the acid catalyst in the presence of the acid scavenger, the runaway polycondensation of the furan resin can be suppressed.

The dispersion and mixing can be performed using a planetary centrifugal mixer (for example, THINKY MIXER manufactured by THINKY CORPORATION), Trimix (for example, planetary mixer PLM-2 manufactured by INOUE MFG., INC.), a disperser, a three roll mill, a ball mill, a bead mill, and the like.

The dispersion and mixing may be performed under atmospheric pressure or under vacuum. The dispersion and mixing may be performed at room temperature, for example, 15°C to 25°C, and from the aspect of workability, the temperature may be raised to, for example, 25°C to 40°C depending on the property of the raw material. While the dispersion and mixing time varies also depending on other conditions when the dispersion and mixing is performed, it is only necessary that the respective components reach the dispersed state or the dissolved state, and the dispersion and mixing time is, for example, 1 minute to 12 hours, preferably 5 minutes to 6 hours, and further preferably 10 minutes to 3 hours.

### (Kit)

The kit of the embodiment contains a first agent comprising the furan resin and a second agent comprising the acid scavenger and the acid catalyst. The kit of the present disclosure can prepare a composition by mixing the first agent and the second agent, and can provide a furan resin cured product through the progress of polycondensation of the furan resin comprised in the composition.

Amounts of the furan resin, the acid scavenger, and the acid catalyst, and other components used as necessary comprised in the kit of the embodiment are similar to those of the above-described one-component composition. When the kit of the embodiment comprises the other components, the other components may be comprised in the first agent, or may be comprised in the second agent.

While the method for manufacturing the first agent and the second agent is not specifically limited, the first agent and the second agent can be prepared by mixing components comprised in each agent.

### (Furan Resin Cured Product)

The furan resin cured product of the embodiment is a cured product of the raw material composition comprising the furan resin, the acid scavenger, and the acid catalyst, and the acid scavenger comprises the epoxy resin. Examples of the raw material composition include the above-described one-component composition, and a composition prepared by mixing the first agent and the second agent of the above-described kit. The furan resin cured product of the embodiment is usually a composition obtained by curing the raw material composition for 1 hour to 6 hours. The range described above is preferable because the runaway polycondensation of the furan resin is suppressed and excessively low productivity is avoided.

In the raw material composition, the amount of substance of cation derived from the acid catalyst is preferably equal to or less than the amount of substance of the acid scavenging moiety comprised in the acid scavenger. More specifically, in the raw material composition, when the amount of substance of cation derived from the acid catalyst is assumed to be 1, the amount of substance of the acid scavenging moiety comprised in the acid scavenger is preferably 1 to 10, more preferably 1 to 6, and further preferably 1 to 3. The above-described range is preferable because a viscosity increase rate (pot life) after 24 hours is low, curability is high, and the heat resistance and the electric property after curing can be provided.

Since the furan resin cured product is excellent in heat resistance and electric property, the furan resin cured product can be used for electronic components including a power semiconductor.

The furan resin cured product has preferably a relative dielectric constant of 20.0 εr or less and a dielectric loss tangent of 0.30 or less at 1 MHz, more preferably the relative dielectric constant of 10.0 εr or less and the dielectric loss tangent of 0.20 or less at 1 MHz, and further preferably the relative dielectric constant of 5.0 εr or less and the dielectric loss tangent of 0.10 or less at 1 MHz. While the lower limit of the relative dielectric constant is not specifically limited, the relative dielectric constant is ordinarily 1.0 εr or more. While the lower limit of the dielectric loss tangent is not specifically limited, the dielectric loss tangent is ordinarily 0.001 or more. The above-described ranges are preferable for insulating materials for electronic components. The relative dielectric constant and the dielectric loss tangent of the furan resin cured product can be measured according to IEC 62631-2-1 (automatic balancing bridge method).

The furan resin cured product has a volume resistivity of preferably 1.0×10¹¹ Ω•cm or more, more preferably 1.0×10¹² Ω•cm or more, and further preferably 1.0×10¹³ Ω•cm or more. While the upper limit of the volume resistivity is not specifically limited, the volume resistivity is ordinarily 1.0×10¹⁸ Ω•cm or less. The above-described ranges are preferable for insulating materials for electronic components. The volume resistivity of the furan resin cured product can be measured according to IEC 62631-3-1 specification or JIS C 2139-3-1 specification.

The furan resin cured product has a dielectric breakdown voltage of preferably 1 kV or more, more preferably 3 kV or more, and further preferably 7 kV or more. While the upper limit of the dielectric breakdown voltage is not specifically limited, the dielectric breakdown voltage is ordinarily 100 kV or less. The above-described ranges are preferable for insulating materials for electronic components. The dielectric breakdown voltage of the furan resin cured product can be measured according to IEC 60243-1 specification or JIS C 2110-1 specification.

The furan resin cured product has a dielectric breakdown strength of preferably 0.5 kV/mm or more, more preferably 1 kV/mm or more, and further preferably 3 kV/mm or more. While the upper limit of the dielectric breakdown strength is not specifically limited, the dielectric breakdown strength is ordinarily 50 kV/mm or less. The above-described ranges are preferable for insulating materials for electronic components. The dielectric breakdown strength of the furan resin cured product can be measured according to IEC 60243-2 specification or JIS C 2110-1 specification.

### (Method for Manufacturing Furan Resin Cured Product)

The furan resin cured product can be obtained by polycondensation of the furan resin comprised in the raw material composition. As a specific example, the furan resin cured product can be obtained by heating the raw material composition. While the heating may be performed in one stage, from the aspect of more stably manufacturing the furan resin cured product, the heating is preferably performed in multiple stages, for example, two stages or three stages.

When the heating is performed in two stages, for example, it is preferable that the heating in the first stage is performed in a range of from 40°C to 100°C for 1 to 2 hours, and the heating in the second stage is performed in a range of from 100°C to 130°C for 1 to 2 hours. In one aspect of the case where the heating is performed in two stages, the heating in the first stage is performed for the purpose of causing a polymerization reaction of a furfuryl alcohol unit of the furan resin and an epoxy unit to form a chain and removing a volatile component (for example, water) and the like when the raw material composition comprises the volatile component and the like, and the heating in the second stage is performed for the purpose of causing a Diels-Alder reaction or a Michael addition reaction to form a three-dimensional crosslink.

When the heating is performed in three stages, for example, it is preferable that the heating in the first stage is performed in a range of from 40°C to 100°C for 1 to 2 hours, the heating in the second stage is performed in a range of from 80°C to 130°C for 1 to 2 hours, and the heating in the third stage is performed in a range of from 120°C to 180°C for 1 to 2 hours. In one aspect of the case where the heating is performed in three stages, the heating in the first stage is performed for the purpose of removing a volatile component (for example, water) and the like when the raw material composition comprises the volatile component and the like, the heating in the second stage is performed for the purpose of causing a polymerization reaction of a furfuryl alcohol unit of the furan resin and an epoxy unit to form a chain, and the heating in the third stage is performed for the purpose of causing a Diels-Alder reaction or a Michael addition reaction to form a three-dimensional crosslink. The heating may be performed in four or more stages, and may be performed for a long time.

### [Examples]

While the following describes the embodiment with examples, the present disclosure is not limited by these examples.

The following materials were used as the raw material.
Furan resin-1: polyfurfuryl alcohol (FA) type furan resin (mixture in which furan oligomer has an average molecular weight of 1,000, and furfuryl alcohol and furfural are comprised in an amount of less than 30 weight%)
Furan resin-2: FA•HCHO copolymerization type furan resin (Hitafuran VF-303 manufactured by Hitachi Kasei Kogyo Kabushiki Kaisha)
Furan resin-3: FA•urea•HCHO copolymerization type furan resin (mixture in which furan oligomer has an average molecular weight of 1,000, and a ratio of amount of substance of copolymerization of FA•urea•HCHO is 1:1:1, and furfuryl alcohol and furfural are comprised in an amount of less than 30 weight%)
PTSA: paratoluenesulfonic acid (manufactured by FUJIFILM Wako Pure Chemical)
TFA: trifluoroacetic acid (manufactured by FUJIFILM Wako Pure Chemical)
Borane-based acid: tetrakispentafluorophenylborate
Antimony-based acid: hexafluoroantimonic acid
Amine: N-methylmorpholine (manufactured by Tokyo Chemical Industry) 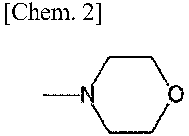
Oxetane: 3-ethyl-3-(4-hydroxybutyloxymethyl)oxetane (manufactured by UBE) 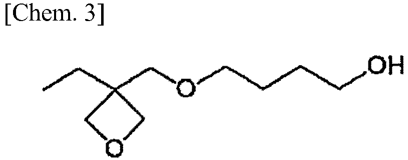
Epoxy resin: epoxy resin described in Table 4

### [Table 4]

**Table 4**

| Compound Number | Compound |
|---|---|
| 41 | 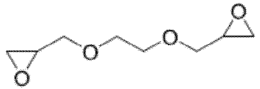 |
| 55 | 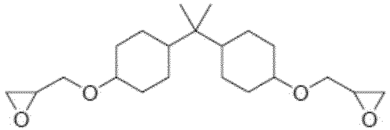 |
| 63 | 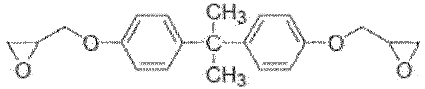 |
| 72 | 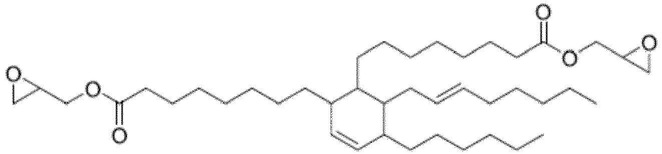 |
| 75 | 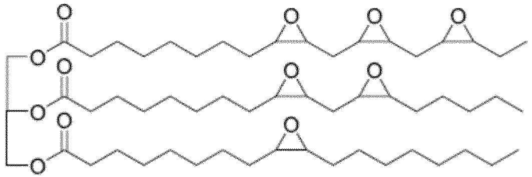 |
| 88 | 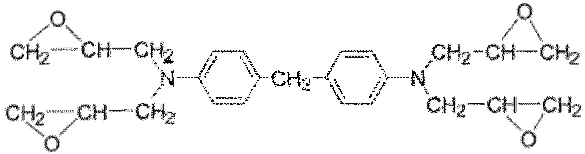 |
| 91 | 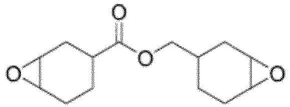 |
| 94 | 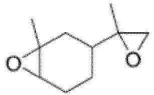 |

### [Example 1]

### (Preparation of One-Component Composition)

Respective components were combined with proportions indicated in Table 5 and Table 6, and dispersed and mixed. Specifically, an acid was dispersed in an epoxy resin, and a mixture of the acid and the epoxy resin was mixed with a furan resin, thereby preparing a one-component composition.

The mixing was performed while appropriately performing cooling such that the temperature became in a range of from 20°C to 40°C under atmospheric pressure using THINKY MIXER manufactured by THINKY CORPORATION. A stirring time to obtain the mixture of the acid and the epoxy resin was 10 minutes in total excluding the cooling time, and a stirring time after combining the furan resin in the mixture was 10 minutes in total excluding the cooling time. Table 5 and Table 6 indicate the type, and the amounts of the respective raw materials.

### [Table 5]

**Table 5**

| Test No. | Furan Resin | | Acid Catalyst | | Acid Scavenger | | Amount of Substance of Cation/ Amount of Substance of Acid Scavenging Moiety (Mole Ratio) |
|---|---|---|---|---|---|---|---|
| | Raw Material | pts.mass | Raw Material | pts.mass | Raw Material | pts.mass | - |
| 1 | Furan Resin-1 | 100 | PTSA | 3 | - | 0 | - |
| 2 | Furan Resin-1 | 100 | PTSA | 3 | Compound Number 91 | 5 | 0.440 |
| 3 | Furan Resin-1 | 100 | PTSA | 6 | Compound Number 91 | 10 | 0.440 |
| 4 | Furan Resin-1 | 100 | PTSA | 12 | Compound Number 91 | 20 | 0.440 |
| 5 | Furan Resin-1 | 100 | PTSA | 4.5 | Compound Number 91 | 4.5 | 0.733 |
| 6 | Furan Resin-1 | 100 | PTSA | 4.5 | Compound Number 91 | 3.3 | 0.999 |
| 7 | Furan Resin-1 | 100 | PTSA | 4.5 | Compound Number 91 | 3.0 | 1.10 |
| 8 | Furan Resin-1 | 100 | PTSA | 1 | Compound Number 91 | 1.6 | 0.458 |
| 9 | Furan Resin-1 | 100 | PTSA | 5 | Compound Number 91 | 8 | 0.458 |
| 10 | Furan Resin-1 | 100 | PTSA | 10 | Compound Number 91 | 16 | 0.458 |
| 11 | Furan Resin-1 | 100 | PTSA | 100 | Compound Number 91 | 160 | 0.458 |
| 12 | Furan Resin-1 | 100 | PTSA | 200 | Compound Number 91 | 320 | 0.458 |
| 13 | Furan Resin-1 | 100 | PTSA | 500 | Compound Number 91 | 800 | 0.458 |

### [Table 6]

**Table 6**

| Test No. | Furan Resin | | Acid Catalyst | | Acid Scavenger | | Amount of Substance of Cation/ Amount of Substance of Acid Scavenging Moiety (Mole Ratio) |
|---|---|---|---|---|---|---|---|
| | Raw Material | pts.mass | Raw Material | pts.mass | Raw Material | pts.mass | - |
| 14 | Furan Resin-1 | 100 | PTSA | 3 | Compound Number 91 | 5 | 0.440 |
| 15 | Furan Resin-2 | 100 | PTSA | 3 | Compound Number 91 | 5 | 0.440 |
| 16 | Furan Resin-3 | 100 | PTSA | 3 | Compound Number 91 | 5 | 0.440 |
| 17 | Furan Resin-1 | 100 | TFA | 2 | Compound Number 91 | 5 | 0.442 |
| 18 | Furan Resin-1 | 100 | Borane-based Acid | 12 | Compound Number 91 | 5 | 0.445 |
| 19 | Furan Resin-1 | 100 | Antimony-based Acid | 4 | Compound Number 91 | 5 | 0.425 |
| 20 | Furan Resin-1 | 100 | PTSA | 3 | Compound Number 41 | 7 | 0.434 |
| 21 | Furan Resin-1 | 100 | PTSA | 3 | Compound Number 88 | 3.5 | 0.449 |
| 22 | Furan Resin-1 | 100 | PTSA | 3 | Compound Number 63 | 7 | 0.421 |
| 23 | Furan Resin-1 | 100 | PTSA | 3 | Compound Number 72 | 6 | 0.468 |
| 24 | Furan Resin-1 | 100 | PTSA | 3 | Compound Number 75 | 16 | 0.463 |
| 25 | Furan Resin-1 | 100 | PTSA | 3 | Compound Number 94 | 3 | 0.488 |
| 26 | Furan Resin-1 | 100 | PTSA | 3 | Compound Number 55 | 7 | 0.439 |
| 27 | Furan Resin-1 | 100 | PTSA | 3 | Compound Number 91 + Amine | 2 +2 | 0.489 |
| 28 | Furan Resin-1 | 100 | PTSA | 3 | Compound Number 91 + Oxetane | 3 + 3 | 0.439 |
| 29 | Furan Resin-1 | 100 | PTSA | 5 | - | 0 | - |
| 30 | Furan Resin-1 | 100 | PTSA | 5 | Compound Number 91 | 4 | 0.916 |
| 31 | Furan Resin-1 | 100 | PTSA | 5 | Compound Number 91 | 10 | 0.366 |
| 32 | Furan Resin-1 | 100 | PTSA | 10 | Compound Number 91 | 20 | 0.366 |

### (Measurement of Viscosity Increase Rate)

The viscosity of the one-component composition immediately after preparation (within one hour) was measured. For the viscosity measurement, an E-type viscometer manufactured by Brookfield (product name LVDV2T) was used. The viscosimeter was prepared in advance such that the measurement was able to be performed at 25°C.

After the viscosity of the one-component composition immediately after preparation was measured, a part of the composition was put into a constant temperature bath set to 25°C and extracted from the constant temperature bath after 24 hours, and the viscosity was measured by the similar method.

Further, after the viscosity of the one-component composition immediately after preparation was measured, a part of the composition was put into a constant temperature bath set to 40°C, extracted from the constant temperature bath after 24 hours, and cooled to 25°C, then the viscosity was measured by the similar method.

The viscosity increase rate after 24 hours in the case of storing at 25°C after the preparation and the viscosity increase rate after 24 hours in the case of storing at 40°C after the preparation were calculated. Table 7 indicates the viscosity increase rate. In Table 7, those in which the viscosity was not able to be measured due to curing at the point when 24 hours elapsed are described as Cured. Further, those in which quick progress of the curing was visually confirmed after the preparation of the one-component composition are described as Runaway•Cured.

### [Table 7]

**Table 7**

| Test No. | Viscosity Increase Rate (25°C, 24 hours) | Viscosity Increase Rate (40°C, 24 hours) |
|---|---|---|
| | (%) | (%) |
| 1 | Runaway•Cured | Runaway•Cured |
| 2 | 0% | 0% |
| 3 | 0% | 0% |
| 4 | 0% | 0% |
| 5 | 0% | 10% |
| 6 | 30% | 88% |
| 7 | Cured | Cured |
| 8 | 0% | 0% |
| 9 | 0% | 0% |
| 10 | 0% | 0% |
| 11 | 0% | 0% |
| 12 | 0% | 0% |
| 13 | 0% | 0% |
| 14 | 0% | 0% |
| 15 | 0% | 0% |
| 16 | 0% | 0% |
| 17 | 0% | 0% |
| 18 | 0% | 0% |
| 19 | 0% | 0% |
| 20 | 0% | 0% |
| 21 | 0% | 0% |
| 22 | 0% | 0% |
| 23 | 0% | 0% |
| 24 | 0% | 0% |
| 25 | 0% | 0% |
| 26 | 0% | 0% |
| 27 | 0% | 0% |
| 28 | 0% | 0% |
| 29 | Runaway•Cured | Runaway•Cured |
| 30 | 0% | 0% |
| 31 | 0% | 0% |
| 32 | 0% | 0% |

### (Preparation of Furan Resin Cured Product)

By curing the one-component composition with a method below, a furan resin cured product having a thickness of 2 mm×10 cm×10 cm was produced.

The one-component composition was cast into a mold configured of a stainless steel plate having inside dimensions of a thickness of 2 mm×10 cm×10 cm, and heating was performed as described below, thereby curing the one-component composition. The one-component composition was extracted after the heating, and the furan resin cured product was obtained.
First stage: temperature was controlled to from 80°C to 100°C, for two hours
Second stage: temperature was controlled to from 100°C to 120°C, for two hours
Third stage: temperature was controlled from 120°C to 140°C, for two hours

### (Evaluation of Furan Resin Cured Product)

Various physical properties of the furan resin cured product were evaluated by methods below. In the measurement of the physical property, the furan resin cured product having the thickness of 2 mm×10 cm×10 cm was appropriately cut to be used.

### [Glass-Transition Temperature Measurement]

A mean coefficient of linear expansion was measured using a Thermomechanical Analyzer (TMA), and an inflection point of the mean coefficient of linear expansion was assumed as the glass-transition temperature of the furan resin cured product and evaluated as an index of heat resistance.
Test method: according to ISO 11359-2
Analysis item: mean coefficient of linear expansion
Sample dimensions: 5×2×10 mm (height)
Test conditions: measurement temperature; room temperature to 300°C
   heating temperature; 5 °C/min
   atmosphere; in nitrogen stream (150 mL/min)
   test weight; 32 mN
   number of measurements; n = 1

Table 8 indicates the evaluation of heat resistance according to criteria below based on the evaluation result of the glass-transition temperature.
Excellent: 240°C or higher
Good: 175°C or higher
Poor: less than 175°C

### [Table 8]

**Table 8**

| Test No. | Heat Resistance |
|---|---|
| 1 | Excellent |
| 2 | Excellent |
| 3 | Excellent |
| 4 | Excellent |
| 5 | Excellent |
| 6 | Excellent |
| 7 | - |
| 8 | Good |
| 9 | Excellent |
| 10 | Excellent |
| 11 | Good |
| 12 | Good |
| 13 | Good |
| 14 | Excellent |
| 15 | Excellent |
| 16 | Excellent |
| 17 | Excellent |
| 18 | Excellent |
| 19 | Excellent |
| 20 | Excellent |
| 21 | Excellent |
| 22 | Excellent |
| 23 | Excellent |
| 24 | Excellent |
| 25 | Excellent |
| 26 | Excellent |
| 27 | Excellent |
| 28 | Excellent |
| 29 | Excellent |
| 30 | Excellent |
| 31 | Excellent |
| 32 | Excellent |

### [Relative Dielectric Constant and Dielectric Loss Tangent]

The relative dielectric constant and the dielectric loss tangent were measured under the conditions below.
Test method: IEC 62631-2-1 (automatic balancing bridge method)
Sample dimensions: 60×60×2.0 thickness (mm)
Test condition: frequency; 1 MHz
Electrode dimensions: main electrode diameter φ36 mm, ring-shaped electrode inner diameter φ38 mm
Electrode material: tinfoil
Test environment: 23°C ±2°C, 50% RH ±5% RH
Measurement device: Precision LCR meter E4980A (manufactured by Agilent Technologies, Inc.)

### [Volume Resistivity]

The volume resistivity was measured under the conditions below.
Test method: according to IEC 62631-3-1, JIS C 2139-3-1
Test condition: applied voltage; DC 100 V × 60 s
Measurement temperature: 23°C
Electrode dimensions: main electrode diameter φ26 mm, ring-shaped electrode inner diameter φ38 mm
Electrode material: tinfoil
Conditioning: 23°C ±2°C, 50% RH ±5% RH × 24 h or longer
Test room environment: 23°C ±2°C, 50% RH ±5% RH
Measurement device: high resistance meter 4339B (manufactured by Agilent Technologies, Inc.)

### [Dielectric Breakdown Voltage and Dielectric Breakdown Strength]

The dielectric breakdown voltage and the dielectric breakdown strength were measured under the conditions below.
Test method: according to IEC 60243-1, -2, JIS C 2110-1, -2
Test condition: Mode of increase of voltage; Short-time test (alternate current, 50 Hz)
Surrounding medium: in insulating oil
Measurement temperature: 23°C
Electrodes: φ6 column/φ6 column
Boost speed: 3 kV/s
Test environment: 23°C ±2°C, 50% RH ±5% RH
Measurement device: dielectric breakdown test device YST-243-100RHO (manufactured by YAMAYOSHIKENKI)

Table 9 indicates the evaluation results of the relative dielectric constant, the dielectric loss tangent, the volume resistivity, the dielectric breakdown voltage, and the dielectric breakdown strength of the furan resin cured product.

### [Table 9]

**Table 9**

| Test No. | Relative Dielectric Constant (1 MHz) | Dielectric Loss Tangent (1 MHz) | Volume Resistivity | Dielectric Breakdown Voltage | Dielectric Breakdown Strength |
|---|---|---|---|---|---|
| | (εr) | - | (Ω•cm) | (kV) | (kV/mm) |
| 17 | 5.0 | 0.03 | >10¹⁴ | 58 | 28 |
| 18 | 3.5 | 0.04 | >10¹⁵ | 55 | 29 |
| 19 | 4.0 | 0.02 | >10¹⁵ | 60 | 29 |
| 20 | 5.0 | 0.03 | >10¹⁴ | 59 | 29 |
| 21 | 5.0 | 0.03 | >10¹⁴ | 45 | 23 |
| 22 | 3.5 | 0.03 | >10¹⁴ | 55 | 32 |
| 23 | 4.5 | 0.03 | >10¹⁴ | 56 | 28 |
| 24 | 5.0 | 0.03 | >10¹³ | 57 | 29 |
| 25 | 4.0 | 0.03 | >10¹⁴ | 52 | 28 |
| 26 | 4.0 | 0.03 | >10¹³ | 58 | 29 |
| 27 | 5.0 | 0.04 | >10¹³ | 43 | 23 |
| 28 | 4.5 | 0.04 | >10¹⁴ | 56 | 28 |
| 29 | 8.5 | 0.14 | >10¹² | 24 | 14 |
| 30 | 5.0 | 0.03 | >10¹³ | 57 | 29 |
| 31 | 4.0 | 0.04 | >10¹³ | 55 | 29 |
| 32 | 4.5 | 0.08 | >10¹³ | 46 | 28 |

Table 10 indicates the evaluation of electric property according to criteria below based on the evaluation results of the relative dielectric constant, the dielectric loss tangent, the volume resistivity, the dielectric breakdown voltage, and the dielectric breakdown strength of the furan resin cured product.

### <Criteria of Electric Property>

Relative dielectric constant: 5.0 (εr) or less
Dielectric loss tangent: 0.10 or less
Volume resistivity: 1.0×10¹³ (Ω•cm) or more
Dielectric breakdown voltage: 7 (kV) or more
Dielectric breakdown strength: 4 (kV/mm) or more
Among the above-described five kinds of evaluations,
Satisfying five kinds: Excellent
Satisfying four kinds or less: Poor
Table 10 indicates the result.

### [Table 10]

**Table 10**

| Test No. | Electric Property |
|---|---|
| 17 | Excellent |
| 18 | Excellent |
| 19 | Excellent |
| 20 | Excellent |
| 21 | Excellent |
| 22 | Excellent |
| 23 | Excellent |
| 24 | Excellent |
| 25 | Excellent |
| 26 | Excellent |
| 27 | Excellent |
| 28 | Excellent |
| 29 | Poor |
| 30 | Excellent |
| 31 | Excellent |
| 32 | Excellent |

The above-described experimental examples suggest that the one-component composition of the present disclosure has a low viscosity increase rate and a long usable time. Further it is suggested that the furan resin cured product of the present disclosure is excellent in heat resistance and electric property, and can be used in various applications, such as a use for an electronic component.

Furthermore, in experiments in which the epoxy resin of the compound number 92, 99, 100, or 101 in Table 1 was used instead of the epoxy resin of the compound number 91 (alicyclic epoxy resin) in the test No. 14, the results were similar to the result of the use of the epoxy resin of the compound number 91.

In experiments in which the epoxy resin of the compound number 4, 18, 20, 24, 26, 27, 37, 58, or 60 in Table 1 was used instead of the epoxy resin of the compound number 41 (glycidyl ether type epoxy resin) in the test No. 20, the results were similar to the result of the use of the epoxy resin of the compound number 41.

In experiments in which the epoxy resin of the compound number 85 or 86 in Table 1 was used instead of the epoxy resin of the compound number 88 (glycidyl amine type epoxy resin) in the test No. 21, the results were similar to the result of the use of the epoxy resin of the compound number 88.

In experiments in which the epoxy resin of the compound number 62, 65, or 67 in Table 1 was used instead of the epoxy resin of the compound number 63 (bisphenol A type epoxy resin) in the test No. 22, the results were similar to the result of the use of the epoxy resin of the compound number 63.

In experiments in which the epoxy resin of the compound number 8, 28, 53, or 59 in Table 1 was used instead of the epoxy resin of the compound number 72 (glycidyl ester type epoxy resin) in the test No. 23, the results were similar to the result of the use of the epoxy resin of the compound number 72.

In experiments in which the epoxy resin of the compound number 74, 76, or 77 in Table 1 was used instead of the epoxy resin of the compound number 75 (olefin oxidized type epoxy resin) in the test No. 24, the results were similar to the result of the use of the epoxy resin of the compound number 75.

In experiments in which the epoxy resin of the compound number 93, 95, 96, 97, 98, 102, or 103 in Table 1 was used instead of the epoxy resin of the compound number 94 (alicyclic epoxy resin) in the test No. 25, the results were similar to the result of the use of the epoxy resin of the compound number 94.

In experiments in which the epoxy resin of the compound number 56, 57, or 61 in Table 1 was used instead of the epoxy resin of the compound number 55 (hydrogenated bisphenol type epoxy resin) in the test No. 26, the results were similar to the result of the use of the epoxy resin of the compound number 55.

The upper limit values and/or the lower limit values of the numerical ranges described herein can be arbitrarily combined to specify a preferable range. For example, an upper limit value and a lower limit value of the numerical ranges can be arbitrarily combined to specify a preferable range, upper limit values of the numerical ranges can be arbitrarily combined to specify a preferable range, and lower limit values of the numerical ranges can be arbitrarily combined to specify a preferable range. In this application, a numerical range expressed using a term "to" includes respective numerical values described before and after the term "to" as a lower limit value and an upper limit value.

While the embodiment is described above in detail, specific configurations are not limited to the embodiment, and when there are changes of designs within the range not departing from the gist of the present disclosure, they are included in the present disclosure.

## Claims

1. A one-component composition comprising:
a furan resin;
an acid scavenger; and
an acid catalyst,
wherein the acid scavenger comprises an epoxy resin.

2. The one-component composition according to claim 1,
wherein an amount of substance of cation derived from the acid catalyst is equal to or less than an amount of substance of an acid scavenging moiety comprised in the acid scavenger.

3. The one-component composition according to claim 1,
wherein a viscosity increase rate after 24 hours in a case of storing at 25°C after preparation is 100% or less.

4. The one-component composition according to claim 1,
wherein a viscosity increase rate after 24 hours in a case of storing at 40°C after preparation is 100% or less.

5. A furan resin cured product that is a cured product of a raw material composition comprising a furan resin, an acid scavenger, and an acid catalyst,
wherein the acid scavenger comprises an epoxy resin.

6. The furan resin cured product according to claim 5,
wherein in the raw material composition, an amount of substance of cation derived from the acid catalyst is equal to or less than an amount of substance of an acid scavenging moiety comprised in the acid scavenger.

7. The furan resin cured product according to claim 5,
wherein a relative dielectric constant is 5.0 εr or less and a dielectric loss tangent is 0.10 or less at 1 MHz.

8. The furan resin cured product according to claim 5,
wherein a volume resistivity is 1.0×10¹³ Ω•cm or more.

9. The furan resin cured product according to claim 5,
wherein a dielectric breakdown voltage is 7 kV or more, and a dielectric breakdown strength is 3 kV/mm or more.

10. A kit containing:
a first agent comprising a furan resin; and
a second agent comprising an acid scavenger and an acid catalyst.
